# EUROPÄISCHE PATENTANMELDUNG

(11) **EP 0 565 194 A1**
(43) Veröffentlichungstag der Anmeldung: **13.10.1993**
(21) Anmeldenummer: 93201005.1
(22) Anmeldetag: 06.04.1993
(51) Int. Cl.: G06F 9/42

(54) **Anordnung zum Abspeichern und Auslesen von Rücksprungdaten**

(30) Priorität: 09.04.1992 DE 4211966
(71) Anmelder: Philips Patentverwaltung GmbH, 22335 Hamburg (DE); PHILIPS ELECTRONICS N.V., 5621 BA Eindhoven (NL)
(72) Erfinder: Bauer, Harald, c/o Philips Patentverwaltung GmbH, W-2000 Hamburg 1 (DE); Hellwig, Karl, c/o Philips Patentverwaltung GmbH, W-2000 Hamburg 1 (DE); Lorenz, Dietmar, c/o Philips Patentverwaltung GmbH, W-2000 Hamburg 1 (DE); Schuck, Johannes, Dr., c/o Philips Patentver. GmbH, W-2000 Hamburg 1 (DE)
(74) Vertreter: Peters, Carl Heinrich, Dipl.-Ing.

(57) **Zusammenfassung**

Für die Speicherung von Rücksprungdaten wird insbesondere bei schnellen Signalprozessoren ein besonderer, aus Registern aufgebauter Stack benutzt, der insbesondere innerhalb eines Taktzyklus eingeschrieben bzw. ausgelesen werden kann. Die Anzahl der verschachtelten Programme ist dann allerdings durch die Größe des Stacks begrenzt. Wenn zur Vermeidung einer solchen Begrenzung der Datenspeicher bzw. ein Bereich darin als Stack benutzt werden soll, erfordert das Abspeichern und insbesondere das Auslesen von Rücksprungdaten jeweils einen Speicherzugriff, der nicht innerhalb eines Taktzyklus abgewickelt werden kann. Erfindungsgemäß wird daher ein zusätzliches Register verwendet, in das bei einem Programmsprung die Rücksprungdaten eingeschrieben werden, und beispielsweise parallel zur Ausführung des folgenden Befehls wird der Inhalt dieses Registers in den Stackbereich des Datenspeichers übertragen. Ein folgender Rücksprung kann dann schnell mit den Daten des Registers durchgeführt werden. Damit auch mehrere aufeinanderfolgende Rücksprünge auf diese Weise durchgeführt werden können, werden nach jedem Rücksprung die Rücksprungdaten des vorhergehenden Programmsprungs aus dem Datenspeicher in das Register übertragen, und zwar ebenfalls parallel zur Ausführung des nächsten Befehls. Dadurch können Programmsprünge und Rücksprünge schnell ausgeführt werden, ohne daß der Befehlsablauf durch Zugriffe auf den Stack im Datenspeicher behindert bzw. verzögert wird.

## Beschreibung

Die Erfindung betrifft eine Anordnung zum Abspeichern und Auslesen von Rücksprungdaten, insbesondere Programmadressen, bei einem Programmsprung und einem Rücksprung in einer Datenverarbeitungsanlage, die einen Datenspeicher großer Kapazität mit wenigstens einem Datenanschluß, einen Programmspeicher mit einem Programmadreßgenerator und eine Speicheranordnung für die Rücksprungdaten aufweist, wobei die Speicheranordnung bei einem Programmsprung die Rücksprungdaten aufnimmt und bei einem Rücksprung die zuletzt aufgenommenen Rücksprungdaten abgibt.

Bei einem Programmsprung in einer Datenverarbeitungsanlage, der beispielsweise durch den Aufruf eines Unterprogramms oder durch ein externes Unterbrechungssignal ausgelöst wird, ist es üblich, die zuletzt erzeugte Adresse des Programmadreßgenerators, der allgemein auch als Programmzähler oder Befehlszähler bezeichnet wird, abzuspeichern, damit nach Beendigung des Unterprogramms das übergeordnete Programm unmittelbar an der unterbrochenen Stelle fortgesetzt werden kann. Dabei kann der Fall auftreten, daß ein Unterprogramm, das durch einen Programmsprung oder ein Unterbrechungssignal aufgerufen wurde, während des Ablaufs seinerseits unterbrochen wird, so daß zeitweise eine mehrfache Verschachtelung von Unterprogrammen vorliegen kann. Die Rücksprungdaten von allen unterbrochenen Unterprogrammen oder Programmteilen werden in der Reihenfolge ihres Auftretens gespeichert, wobei die zuletzt gespeicherten Daten als erstes wieder ausgelesen werden. Hierfür dient insbesondere bei schnellen Signalprozessoren eine besondere Speicheranordnung, die auch mit Stack bezeichnet wird und aus einer Registerbank besteht. Das Abspeichern und das Aufrufen von Rücksprungdaten erfolgt dabei sehr schnell, nämlich innerhalb eines Taktzyklus. Die Anzahl von Unterprogrammen, die ineinander verschachtelt sein können, ist dabei aber durch die Größe der für den Stack verwendeten Registerbank begrenzt.

Aus diesem Grunde wird bei allgemeinen Microprozessoren, die also nicht speziell für die digitale Signalverarbeitung ausgelegt sind, häufig als Stack ein Teil des allgemeinen Datenspeichers benutzt. Bei sehr zeitkritischen Verarbeitungen, wie dies bei der digitalen Signalverarbeitung der Fall ist, ist dabei jedoch nachteilig, daß das Abspeichern der Rücksprungdaten und noch mehr das Aufrufen der Rücksprungdaten eine erhebliche Zeit in Anspruch nimmt, die insbesondere von der Geschwindigkeit des Datenspeichers großer Kapazität abhängt. Andererseits ist bei Verwendung des Datenspeichers als Stack praktisch keine Begrenzung der Anzahl ineinander verschachtelter Unterprogramme gegeben.

Aufgabe der Erfindung ist es, eine Anordnung der eingangs genannten Art anzugeben, bei der der Umfang des Stacks praktisch nicht begrenzt ist, wobei jedoch trotzdem eine schnelle Abspeicherung und insbesondere ein schneller Aufruf der Rücksprungdaten möglich ist.

Diese Aufgabe wird erfindungsgemäß dadurch gelöst, daß bei Verwendung des Datenspeichers als Speicheranordnung ein zusätzliches Register vorgesehen ist, dessen Ausgang bei einem Rücksprung mit dem Adresseneingang des Programmspeichers und nach einem Programmsprung mit dem Datenanschluß des Datenspeichers koppelbar ist und dessen Eingang bei einem Programmsprung mit dem Adressenausgang des Programmadreßgenerators und nach einem Programmrücksprung mit dem Datenanschluß des Datenspeichers koppelbar ist.

Auf diese Weise werden die Vorteile des nahezu unbegrenzten Stacks im Datenspeicher mit der Geschwindigkeit einer gesonderten Speicheranordnung aus Registern für das Stack verbunden. Falls ein Programmsprung auftritt, werden die Rücksprungdaten ohne Zeitverzögerung, d.h. innerhalb eines Taktzyklus, im zusätzlichen Register gespeichert, während der Adreßsprung ausgeführt wird. Nach dem Abspeichern der Rücksprungdaten im zusätzlichen Register wird dessen Inhalt in den Datenspeicher an die Stelle des nächsten freien Speicherplatzes im Stack übertragen, während aus dem Programmspeicher bereits der nächste Befehl aufgerufen und verarbeitet wird. Das zusätzliche Register behält dabei seinen Inhalt. Dieses Abspeichern der Rücksprungdaten aus dem zusätzlichen Register kann aber auch später erfolgen, spätestens dann, wenn ein weiterer Programmsprung auftritt, wobei dann die neuen Rücksprungdaten in das zusätzliche Register übertragen werden und quasi gleichzeitig dessen alter Inhalt in den Datenspeicher an den nächsten freien Speicherplatz im Stack eingeschrieben wird. Bei einem auftretenden Rücksprung werden die zuletzt abgespeicherten Rücksprungdaten unmittelbar ohne Zeitverzögerung ausgelesen, indem der Ausgang des zusätzlichen Registers mit dem Adreßeingang des Programmspeichers verbunden wird, und anschließend werden die vorhergehend abgespeicherten Rücksprungdaten aus dem Datenspeicher ausgelesen und in das zusätzliche Register geladen, während aus dem Programmspeicher bereits der erste Befehl der Rücksprungstelle ausgelesen und verarbeitet wird. In beiden Fällen erfolgt die Verarbeitung der Rücksprungdaten innerhalb eines einzigen Taktzyklus, während das eigentliche Abspeichern bzw. Auslesen der Rücksprungdaten aus dem Datenspeicher quasi im Hintergrund parallel zur jeweils nächsten Befehlsausführung erfolgt.

Ein Ausführungsbeispiel der Erfindung wird nachstehend anhand der Zeichnung erläutert.
Es zeigen
Fig. 1 eine bekannte Anordnung mit einer gesonderten Speicheranordnung für den Stack,
Fig. 2 eine Anordnung nach der Erfindung mit einem zusätzlichen Register.

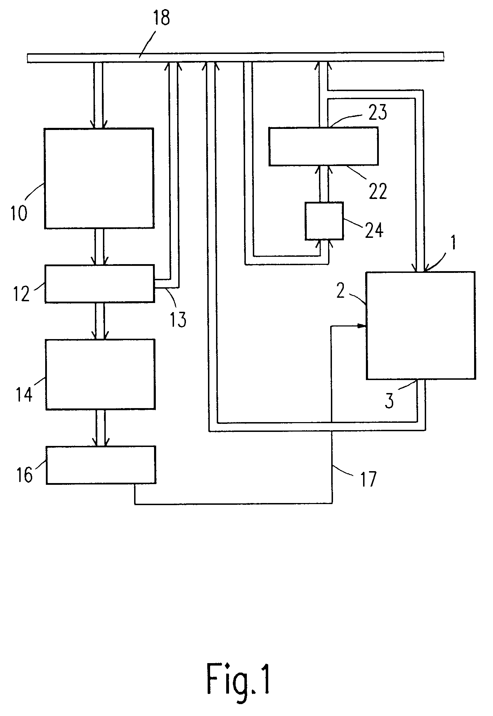

Die Fig. 1 zeigt einen Programmspeicher 10, der die auszuführenden Befehle des Programms bzw. der einzelnen Programme enthält. Jedes ausgelesene Befehlswort wird in ein Instruktionsregister 12 geladen, dessen Ausgang mit einem Befehlsdecoder 14 verbunden ist. Die decodierten Steuersignale werden in einem Befehlsausgangsregister 16 gespeichert, wo sie zur Verfügung stehen, während der nächste Befehl bereits entschlüsselt wird.

Die Adressen des Programmspeichers 10 werden über einen Adressenbus 18 zugeführt, der mit dem Ausgang 23 eines Programmzählregisters 22 verbunden ist. Bei einem Programmablauf ohne Unterbrechungen bzw. Aufruf von Unterprogrammen wird nach jedem aus dem Programmspeicher 10 ausgelesenen Befehl das Programmzählregister um eine Adresse weitergeschaltet. Dies erfolgt durch einen Addierer 24, der die vom Programmzählregister 22 abgegebene Adresse um 1 erhöht dem Eingang des Programmzählregisters 22 zuführt.

Bei einem Programmsprung, der stets durch einen Befehl erfolgt, wird die im Befehl enthaltene neue Adresse über die Verbindung 13 dem Adreßbus 18 zugeführt. Gleichzeitig wird durch weitere, im Decoder 14 entschlüsselte Teile des Befehls über das Ausgangsregister 16 und die Leitung 17 ein Speicher 2 angesteuert, der die Rücksprungdaten aufnimmt und auch als Stack bezeichnet wird. Die Rücksprungdaten sind insbesondere die Adresse des Programmzählregisters 22, die in diesem Moment am Ausgang 23 abgegeben werden. Diese werden über den Eingang 1 des Stacks zugeführt und im nächsten freien Register darin abgespeichert. Gleichzeitig wird auch die Sprungadresse, die über die Verbindung 13 und den Adreßbus 18 dem Adresseneingang des Programmspeichers 10 zugeführt wird, über den Addierer 24 um 1 erhöht dem Programmzählregister 22 zugeführt. Damit werden dann die weiteren Befehle des Unterprogramms aufgerufen.

Wenn ein Unterprogramm endet, wird durch einen entsprechenden Befehl an dessem Ende auf der Verbindung 17 ein Signal erzeugt, das die zuletzt eingeschriebenen Rücksprungdaten aus dem Stack 2 ausliest und am Ausgang abgibt, der nun mit dem Adreßbus 18 gekoppelt ist. Damit springt die dem Programmspeicher 10 zugeführte Adresse nun an die Stelle zurück, wo der vorhergehende Programmsprung erfolgt ist. Da der Stack 2 insbesondere aus Registern aufgebaut ist, können die Informationen darin schnell eingeschrieben und daraus ausgelesen werden, nämlich innerhalb eines einzigen Taktzyklus.

Wenn nun anstelle des besonderen, aus Registern aufgebauten Stacks 2 ein Bereich des Datenspeichers für den Stack verwendet werden soll, muß der Datenausgang 23 des Programmzählregisters 22 mit dem Datenanschluß des Datenspeichers verbunden werden, und entsprechend muß der Datenausgang bzw. Datenanschluß des Datenspeichers für das Abgeben der Rücksprungdaten mit dem Adreßbus 18 koppelbar sein. Dann entstehen jedoch sowohl beim Einschreiben von Rücksprungdaten infolge eines Programmsprungs oder beim Auslesen der Rücksprungdaten infolge eines Rücksprungs erhebliche Wartezeiten, da ein Speicherzyklus des Datenspeichers, der eine große Kapazität aufweist, allgemein länger dauert als eine Taktphase eines schnell arbeitenden Signalprozessors.

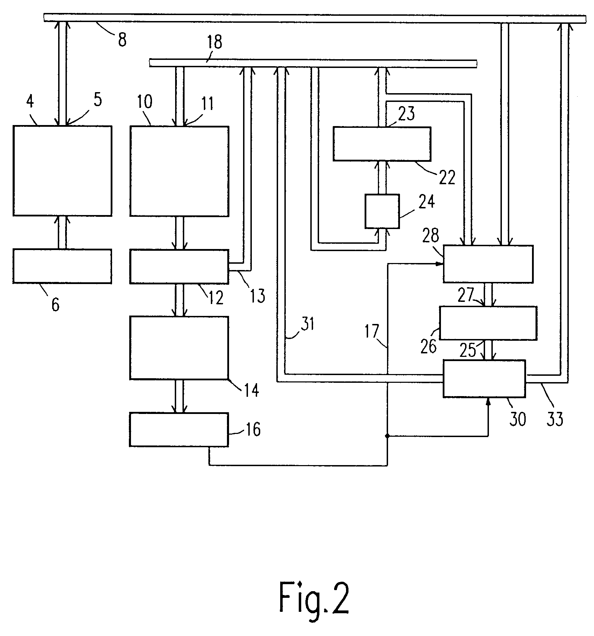

Bei der Anordnung nach Fig. 2 ist der Datenanschluß 5 eines Datenspeichers 4 nun nicht direkt mit dem Ausgang 23 des Programmzählregisters 22 verbunden, sondern über ein zusätzliches Register 26, dessen Eingang 27 ein Multiplexer 28 vorgeschaltet und dessen Ausgang 25 ein Demultiplexer 30 nachgeschaltet ist.

Während des Programmablaufs ohne Unterbrechung ist die Funktion dieser Anordnung gleich wie die Anordnung nach Fig. 1. Bei einem Programmsprung wird wieder die Adresse des Anfangs des Unterprogramms über die Verbindung 13 dem Adreßbus 18 und damit dem Adresseneingang 11 des Programmspeichers 10 zugeführt. Gleichzeitig wird durch ein entsprechendes Signal auf der Verbindung 17 der Eingang 27 des Registers 26 über den Multiplexer 28 mit dem Ausgang 23 des Programmzählregisters 22 verbunden und dessen Adresse in das Register 26 eingeschrieben. Dies kann ohne Zeitverlust, d.h. innerhalb eines Taktzyklus, vorgenommen werden. Während aus dem Programmspeicher 10 nun die erste Adresse des Unterprogramms ausgelesen und verarbeitet wird, verbindet der Demultiplexer 30 den Ausgang 25 des Registers 26, das nun insbesondere die Rücksprungadresse enthält, mit der Verbindung 33, so daß diese Rücksprungadresse nun über den Datenbus 8 dem Datenanschluß 5 des Datenspeichers 4 zugeführt wird und mittels entsprechender Adreßsteuerung aus dem Adreßgenerator 6 an der nächsten freien Stelle des Stackbereichs eingeschrieben wird.

Wenn nun ein weiterer Programmsprung auftritt, wird der vorhergehende Inhalt des Registers 26 mit den neuen Rücksprungdaten überschrieben, die ebenfalls parallel zur Befehlsausführung des nun angesprungenen Unterprogramms in den Datenspeicher 4 eingeschrieben wird. Das Register 26 enthält somit stets nur die letzten Rücksprungdaten, während nur der Datenspeicher 4 auch die vorhergehenden Rücksprungdaten enthält.

Bei einem Rücksprung wird nun über ein entsprechendes Signal auf der Verbindung 17 der Demultiplexer 30 so umgeschaltet, daß der Ausgang 25 des Registers 26 über die Verbindung 31 mit dem Adreßbus 18 und damit mit dem Adreßeingang 11 des Programmspeichers 10 verbunden wird. Die Rücksprungdaten stehen also unmittelbar zur Verfügung, ohne daß dafür ein Speicherzugriff auf dem Datenspeicher 4 erforderlich ist.

Wenn nun jedoch ein weiterer Rücksprung auftritt, ohne daß vorher ein Programmsprung erfolgt ist, würde das Register 26 nun nicht die für den weiteren Rücksprung erforderlichen Rücksprungdaten enthalten. Daher wird unmittelbar nach einem Rücksprung der Multiplexer 28 umgeschaltet, so daß der Eingang 27 des Registers 26 über die Verbindung 35 und den Datenbus mit dem Datenanschluß 5 des Datenspeichers 4 verbunden ist, und durch entsprechende Adressierung durch den Adressengenerator 6 werden aus dem Stackbereich des Datenspeichers 4 die Rücksprungdaten des vorhergehenden Programmsprungs ausgelesen und in das Register 26 übertragen. Dies kann erfolgen, während der erste Befehl nach dem Rücksprung bereits aus dem Programmspeicher 10 ausgelesen und verarbeitet wird. Somit enthält das Register 26 stets die für den nächsten Rücksprung erforderlichen Rücksprungdaten.

Durch das zusätzliche Register 26 ist es also möglich, Programmsprünge und auch Rücksprünge ohne Zeitverlust durchzuführen und dennoch den Datenspeicher 4 für den Stack zu benutzen, so daß nahezu beliebig viele verschachtelte Unterprogramme auftreten können.

## Patentansprüche

1. Anordnung zum Abspeichern und Auslesen von Rücksprungdaten, insbesondere Programmadressen, bei einem Programmsprung und einem Rücksprung in einer Datenverarbeitungsanlage, die einen Datenspeicher großer Kapazität mit wenigstens einem Datenanschluß, einen Programmspeicher mit einem Programmadreßgenerator und eine Speicheranordnung für die Rücksprungdaten aufweist, wobei die Speicheranordnung bei einem Programmsprung die Rücksprungdaten aufnimmt und bei einem Rücksprung die zuletzt aufgenommenen Rücksprungdaten abgibt,
dadurch gekennzeichnet, daß bei Verwendung des Datenspeichers (4) als Speicheranordnung (2) ein zusätzliches Register (26) vorgesehen ist, dessen Ausgang (25) bei einem Rücksprung mit dem Adresseneingang (11) des Programmspeichers (10) und nach einem Programmsprung mit dem Datenanschluß (5) des Datenspeichers (4) koppelbar ist und dessen Eingang (27) bei einem Programmsprung mit dem Adressenausgang (23) des Programmadreßgenerators (22) und nach einem Programmrücksprung mit dem Datenanschluß (5) des Datenspeichers (4) koppelbar ist.
